# FASCICULE DE BREVET EUROPEEN

(11) **EP 0 421 319 B1**
(45) Date de publication et mention de la délivrance du brevet: **15.09.1993**
(21) Numéro de dépôt: 90118795.5
(22) Date de dépôt: 01.10.1990
(51) Int. Cl.: A23L 1/221, A23L 1/227, A23L 1/228

(54) **Procédé de préparation d'un agent aromatisant**
Verfahren zur Herstellung eines Gewürzmittels
Process for preparing a flavourant

(30) Priorité: 06.10.1989 CH 3655/89
(43) Date de publication de la demande: 10.04.1991
(73) Titulaire: SOCIETE DES PRODUITS NESTLE S.A., 1800 Vevey (CH)
(72) Inventeur: Cevallos, Agustin M., Quito (EC); de Wit, Johannes, Urbanizacion Jacaranda, Quito (EC); Heyland, Sven, CH-8534 Weiningen (CH)

(56) Documents cités:
- FR-A- 2 245 295
- FR-A- 2 318 597
- FR-A- 2 321 851
- P. ROBERT: "Dictionnaire Alphabétique & Analogique de la Langue Française", 1973, pages 16,1000, Société du Nouveau Littré, Paris, FR

## Description

La présente invention a pour objet un procédé de préparation d'un agent aromatisant.

Il est connu de préparer des agents aromatisants utilisables, par exemple, dans les sauces ou les potages déshydratés, par réaction d'une source d'acide aminé libre, telle qu'un hydrolysat de protéines végétales ou un autolysat de levure, avec un sucre réducteur.
Il est connu, par exemple par FR 2321851, un procédé de préparation d'un produit aromatisant dont le goût rappelle celui de la viande, dans lequel on fait réagir par chauffage un mélange contenant un produit de dégradation de protéines de levures, un monosaccharide et une substance contenant du soufre à l'état de sulfure.
Il est également connu, par FR 2245295, de préparer une composition d'aromatisation conférant une saveur de boeuf, par chauffage, à 60-250°C, d'un mélange de ribose ou de ribose-5-phosphate avec des constituants solides du plasma sanguin d'animaux jusqu'à ce que le mélange acquière la saveur du boeuf cuit.

La présente invention a pour but de proposer un procédé de préparation d'un agent aromatisant permettant d'éviter l'emploi de quantités importantes d'hydrolysats de protéines ou d'extraits de levure, en utilisant une herbe aromatique telle quelle.

Un premier objet de l'invention est un procédé dans lequel on prépare un mélange comprenant un sucre, un extrait de livèche, qui apporte une partie des acides aminés, et une source d'acides aminés qui apporte le reste des acides aminés, on traite thermiquement le mélange par cuisson puis l'on concentre le mélange cuit.

Un second objet de l'invention est un procédé dans lequel on prépare un mélange comprenant un sucre, un sel, une matière première de livèche se présentant sous forme de pulpe, de feuilles fraîches broyées ou de feuilles séchées broyées, qui apporte une partie des acides aminés, et une source d'acides aminés qui apporte le reste des acides aminés, puis l'on traite thermiquement le mélange par cuisson.

Un avantage de ces procédés est de permettre l'obtention d'un produit possédant un arôme caractéristique, nouveau et naturel.
Un autre avantage est de proposer des procédés simples et permettant l'emploi de matières premières principales pouvant être produites localement.

Les présents procédés de préparation d'agent aromatisant peuvent être mis en oeuvre en semi-continu, ou de préférence en continu.

Ils permettent l'obtention d'un produit pouvant se présenter sous forme d'un liquide, d'une pâte ou d'une poudre.

La livèche est une plante herbacée de la famille des ombellifères, dont l'usage comme herbe aromatique est assez répandu en cuisine traditionnelle.
Selon les procédés objets de la présente invention, la livèche peut être utilisée sous forme d'extrait, de pulpe, de feuilles fraîches broyées ou de feuilles séchées broyées.

Afin de préparer un extrait de livèche qui se prête à la mise en oeuvre d'un procédé selon la présente invention, on peut laver la livèche fraîchement récoltée à l'eau froide, la laisser s'égoutter pendant 15 à 60 minutes, couper les feuilles de manière à obtenir des morceaux de taille moyenne présentant une densité apparente de l'ordre de 500-700 gl⁻¹ favorable à une extraction optimale, puis presser les feuilles coupées avec une presse mécanique ou une presse à vis, par exemple.
On peut obtenir ainsi une matière liquide, ou extrait, et une matière solide, ou pulpe.
On peut pasteuriser l'extrait obtenu, par exemple par chauffage à 75-85°C pendant 30-60 secondes, afin d'inactiver les éventuels enzymes et microorganismes qu'il contiendrait.
On peut ensuite clarifier l'extrait pasteurisé en ajoutant, par exemple, 1% en poids de célite à l'extrait de livèche et en mélangeant pendant 1 à 15 minutes avant d'effectuer une séparation, par exemple par centrifugation, traitement enzymatique ou filtrage.
On peut obtenir ainsi un extrait de livèche qui présente un taux de matière sèche compris entre 3 et 7% en poids.

La pulpe de livèche résultant de la séparation de l'extrait peut présenter un taux de matière sèche compris entre 20 et 30% en poids.
Dans un autre procédé selon la présente invention, on peut utiliser de la livèche se présentant sous forme de cette pulpe, sous forme de feuilles fraîches coupées et broyées ou même sous forme de feuilles fraîches coupées, séchées, par exemple par chauffage à 80-90°C pendant 5-12 heures, puis broyées.

Un sucre qui se prête à la mise en oeuvre des procédés selon la présente invention peut être par exemple un monosaccharide ou un disaccharide. On utilise de préférence le saccharose, dont le degré d'humidité peut être inférieur à 1,5% en poids.

Une source d'acide aminé qui se prête à la mise en oeuvre des procédés selon la présente invention peut être, par exemple, un hydrolysat de protéines végétales, un extrait de levure, un composé simple tel que le glutamate de sodium, ou un extrait végétal riche en protéines, tel qu'un extrait de pomme de terre ou un extrait d'oignon.

Dans une forme particulière de mise en oeuvre d'un procédé selon la présente invention, on prépare un mélange comprenant 100 parties en poids d'extrait de livèche présentant un taux de matière sèche de 3-7% en poids, 5 à 20 parties en poids de saccharose et 3 à 15 parties en poids de glutamate de sodium.
On peut brasser le mélange, par exemple dans un agitateur tournant à 25-30 tours par minute, pendant 5 à 30 minutes afin d'obtenir un mélange homogène et complètement dissout.
Le mélange peut être ensuite traité thermiquement par cuisson à une température comprise entre 80 et 100°C, de préférence 85-90°C durant 1 à 5 heures, de préférence 2 à 3 heures.

Le mélange peut être agité pendant tout ou partie de la durée du traitement thermique de manière uniforme, afin d'éviter une éventuelle caramélisation et une éventuelle modification des arômes.

Le mélange cuit peut être concentré, par exemple par évaporation à pression atmosphérique ou sous pression réduite, de manière à atteindre un taux de matière sèche compris entre environ 75 et 85% en poids.
Pour ce faire, le mélange cuit peut être préchauffé à une température comprise entre 60 et 70°C, puis concentré par évaporation à cette température sous une pression de l'ordre de 100 à 250 mbar pendant 40 à 60 minutes.
Le mélange cuit peut aussi être concentré à pression atmosphérique lors du traitement thermique.

On peut ajouter un sel au mélange concentré.
Un sel qui se prête à la mise en oeuvre des présents procédés peut être, par exemple, un sel utilisé traditionnellement dans le domaine alimentaire.
Il peut s'agir par exemple de chlorure de sodium, dont le degré d'humidité est, de préférence, inférieur à 3% en poids.
On utilise de préférence un sel solide se présentant sous forme de petits grains, de dimensions comprises par exemple entre 0,3 et 0,5 mm, ce qui permet une manipulation plus aisée du mélange, ainsi qu'une déshydratation ultérieure éventuelle plus rapide et plus homogène. On peut ajouter, par exemple, 0 à 2 parties en poids de chlorure de sodium par partie en poids de mélange concentré.

Cette adjonction peut être effectuée à une température comprise entre 40 et 65°C, et le mélange obtenu peut être travaillé pendant 15 à 30 minutes, avec un agitateur tournant à 15-30 tours par minute, de manière à présenter une viscosité adéquate, comprise de préférence entre 2'000 et 4'000 mPa.s (2000-4000 cp).

Cette pâte, autrement dit le mélange concentré et éventuellement salé, peut être utilisée telle quelle, alors qu'elle présente un taux de matière sèche de environ 90-92% en poids pour une pâte contenant du sel, ou d'environ 75-90% pour une pâte ne contenant pas de sel, et une activité de l'eau comprise entre environ 0,25 et 0,50.
La pâte contenant du sel peut aussi être déshydratée jusqu'à un taux de matière sèche de environ 97-98% en poids, puis broyée.
Cette déshydratation peut être effectuée par exemple par chauffage de la pâte à une température de 55-80°C, sous une pression de 10-150 mbar, pendant 1 à 3 heures.
On obtient alors, après broyage, un agent aromatisant sous forme de poudre.
Afin d'obtenir un agent aromatisant se présentant sous forme liquide, on peut ajouter à une partie en poids dudit mélange concentré, 0,6 à 1 partie en poids d'eau et éventuellement 0 à 2 parties en poids de sel, on peut agiter le mélange liquide obtenu puis le filtrer.
On obtient alors un agent aromatisant liquide présentant un taux de matière sèche de environ 40-55% en poids.

Dans une autre forme particulière de mise en oeuvre d'un procédé selon la présente invention, on prépare un mélange comprenant 100 parties en poids de pulpe de livèche présentant un taux de matière sèche de 20-30% en poids, 20 à 40 parties en poids de saccharose, 10 à 30 parties en poids de glutamate de sodium et 30 à 100 parties en poids de chlorure de sodium.

Dans une autre forme particulière de mise en oeuvre, on prépare un mélange comprenant 100 parties en poids de feuilles fraîches de livèche broyées, présentant un taux de matière sèche de 10-15% en poids, 10 à 20 parties en poids de saccharose, 5 à 15 parties en poids de glutamate de sodium et 15 à 50 parties en poids de chlorure de sodium.

Dans une autre forme particulière de mise en oeuvre, on prépare un mélange comprenant 100 parties en poids de feuilles de livèche séchées et broyées présentant un taux de matière sèche de 90-96% en poids, 120-130 parties en poids de saccharose, 75 à 80 parties en poids de glutamate de sodium et 140 à 200 parties en poids de chlorure de sodium.

On peut éventuellement ajouter de l'eau à ces différents mélanges, de manière à obtenir un mélange qui se travaille plus facilement et qui présente, de préférence, un taux de matière sèche de l'ordre de 30-60% en poids.
On peut ajouter, par exemple, 10 à 30 parties en poids d'eau dans le mélange contenant la pulpe de livèche, 5 à 15 parties en poids d'eau dans le mélange contenant les feuilles fraîches broyées et 70 à 100 parties en poids d'eau dans le mélange contenant les feuilles séchées et broyées.
On peut brasser le mélange obtenu, par exemple dans un agitateur tournant à 15-30 tours par minute, pendant 10-60 minutes, afin d'obtenir un mélange homogène.

Le mélange brassé est ensuite traité thermiquement par cuisson, par exemple à une température comprise entre 80 et 100°C pendant 20 à 60 minutes.
On peut agiter le mélange d'une manière constante pendant tout ou partie du traitement thermique.
Après cuisson, le mélange peut être refroidi rapidement, afin d'obtenir une température de 30-35°C après 10-20 minutes.

Le mélange cuit peut alors être déshydraté, par exemple par évaporation à pression réduite, notamment à une température de 65-75°C, sous une pression de 10-20 mbar, pendant 8-15 heures.
On peut aussi effectuer le séchage à pression atmosphérique, dans le même appareil que le traitement thermique.
On obtient alors un produit qui présente un taux de matière sèche de 96-98% en poids, qui peut être ultérieurement broyé afin d'obtenir un agent aromatisant sous forme de poudre.

La présente invention est illustrée plus en détails dans les exemples ci-après.

### Exemple 1

On lave à l'eau froide 10 kg de livèche fraîchement récoltée, présentant un taux de matière sèche de 17% en poids. On laisse égoutter la livèche lavée pendant 25 minutes.
On coupe la livèche de manière à obtenir une densité apparente de l'ordre de 585 g par litre, puis on presse la livèche coupée à l'aide d'une presse à vis tournant à 40 tours par minute.
On obtient 8,5 kg d'un liquide vert, de pH 5,4-6,5. On pasteurise le liquide à 80°C, pendant 45 secondes. On ajoute 90 g de célite et on sépare par filtration les éventuelles matières solides des matières liquides.
On récupère les matières liquides et l'on obtient 7,7 kg d'extrait de livèche liquide, présentant un taux de matière sèche de 4% en poids.

On mélange ces 7,7 kg d'extrait de livèche liquide avec 1,1 kg de saccharose et 0,66 kg de glutamate de sodium. On brasse le mélange à 30 tours par minute, pendant 20 minutes.
On porte le mélange à une température de 85-90°C, et on l'y maintient pendant 4 heures, sous agitation constante.
On concentre le mélange cuit dans un évaporateur à circulation sous une pression de 145 mbar à 65°C pendant 45 minutes.
On obtient alors 2,5 kg de mélange concentré présentant un taux de matière sèche de 80% en poids.

A ces 2,5 kg de mélange concentré on ajoute 2,97 kg de chlorure de sodium en grains fins, à 50°C.
On travaille le mélange concentré et salé pendant 30 minutes, avec un brasseur tournant à 30 tours par minute, afin d'obtenir une pâte homogène.

On obtient 5,2 kg de pâte présentant un taux de matière sèche de 90% en poids.
Cette pâte peut être éventuellement ultérieurement déshydratée, par chauffage à 70°C, sous une pression de 20 mbar pendant 3 heures, puis broyée, pour obtenir 4,7 kg d'agent aromatisant en poudre présentant un taux de matière sèche de 97% en poids.

### Exemple 2

On presse 10 kg de livèche lavée et coupée selon l'exemple 1, à l'aide d'une presse à vis tournant à 40 tours par minute.
On obtient 8,5 kg de liquide et 2,5 kg de pulpe de livèche présentant un taux de matière sèche de 25% en poids.

On prépare un mélange contenant 2,5 kg de pulpe de livèche, 550 ml d'eau, 0,4 kg de glutamate de sodium, 0,8 kg de saccharose et 2,0 kg de chlorure de sodium.
On brasse le mélange avec un agitateur rotatif tournant à une vitesse de 30 tours par minute, pendant 40 minutes.
On porte ensuite le mélange à une température de 90°C et on l'y maintient pendant 30 minutes sous agitation constante.
On refroidit ensuite le mélange rapidement puis on le sèche par évaporation à 70°C sous une pression de 20 mbar, pendant 13 heures, et on le broie.
On obtient alors 3,5 kg d'agent aromatisant en poudre présentant un taux de matière sèche de 97% en poids.

### Exemple 3

On prépare un mélange contenant 2,0 kg d'extrait de livèche liquide obtenu selon l'exemple 1, 0,35 kg de glucose, 1,7 kg de saccharose et 6,0 kg d'oignons réduits en purée.
On brasse le mélange, qui présente un taux de matière sèche de 46% en poids, avec un agitateur rotatif tournant à 30 tours par minute, pendant 20 minutes.

On porte le mélange à une température de 90°C et on l'y maintient pendant 1 heure sous agitation constante.

On refroidit ensuite le mélange puis on le sèche par évaporation à 70°C, sous une pression de 20 mbar de manière à obtenir 4,7 kg d'agent aromatisant présentant un taux de matière sèche de environ 96-97% en poids.

## Revendications

1. Procédé de préparation d'un agent aromatisant, dans lequel on prépare un mélange comprenant un sucre, un extrait de livèche qui apporte une partie des acides aminés, et une source d'acides aminés qui apporte le reste des acides aminés, on traite thermiquement le mélange par cuisson, puis l'on concentre le mélange cuit.

2. Procédé de préparation d'un agent aromatisant, dans lequel on prépare un mélange comprenant un sucre, un sel, une matière première de livèche se présentant sous forme de pulpe, de feuilles fraîches broyées ou de feuilles séchées broyées, qui apporte une partie des acides aminés, et une source d'acides aminés qui apporte le reste des acides aminés, puis l'on traite thermiquement le mélange par cuisson.

3. Procédé selon l'une des revendications 1 et 2, caractérisé par le fait que la source d'acides aminés est choisie dans le groupe comprenant un hydrolysat de protéines végétales, un extrait de levure, le glutamate de sodium et un extrait végétal riche en protéines.

4. Procédé selon la revendication 1, caractérisé par le fait que l'on ajoute un sel au mélange concentré.

5. Procédé selon la revendication 4, caractérisé par le fait que le mélange concentré et salé est déshydraté par chauffage à 55-80°C, sous une pression de 10-150 mbar, pendant 1 à 3 heures.

6. Procédé selon la revendication 2, caractérisé par le fait que le mélange cuit est déshydraté par chauffage à 65-75°C, sous une pression de 10-20 mbar, pendant 8-15 heures.

## Patentansprüche

1. Verfahren zur Herstellung eines Aromatisierungsmittels, in dem ein Gemisch hergestellt wird, das Zucker, Liebstöckelextrakt, der einen Teil der Aminosäuren liefert, und eine Aminosäurequelle, die die übrigen Aminosäuren liefert, umfaßt, das Gemisch durch Kochen wärmebehandelt wird und das gekochte Gemisch konzentriert wird.

2. Verfahren zur Herstellung eines Aromatisierungsmittels, in dem ein Gemisch hergestellt wird, das Zucker, Salz, Liebstökkelrohstoff in Form von Pülpe, zerkleinerten frischen Blättern oder zerkleinerten getrockneten Blättern, der einen Teil der Aminosäuren liefert, und eine Aminosäurequelle umfaßt, die die übrigen Aminosäuren liefert, und das Gemisch anschließend durch Kochen wärmebehandelt wird.

3. Verfahren nach einem der Ansprüche 1 und 2, dadurch gekennzeichnet, daß die Aminosäurequelle aus der Gruppe ausgewählt ist, die ein Hydrolysat pflanzlicher Proteine, einen Hefeextrakt, Natriumglutamat und einen an Proteinen reichen Pflanzenextrakt umfaßt.

4. Verfahren nach Anspruch 1, dadurch gekennzeichnet, daß dem konzentrierten Gemisch ein Salz beigegeben wird.

5. Verfahren nach Anspruch 4, dadurch gekennzeichnet, daß das konzentrierte und gesalzene Gemisch durch Erhitzen auf 55-80°C unter einem Druck von 10-150 mb 1 bis 3 Stunden lang dehydratisiert wird.

6. Verfahren nach Anspruch 2, dadurch gekennzeichnet, daß das gekochte Gemisch durch Erhitzen auf 65-75°C unter einem Druck von 10-20 mb 8-15 Stunden lang dehydratisiert wird.

## Claims

1. A process for the production of a flavouring agent, in which a mixture containing a sugar, a lovage extract which provides part of the amino acids and an amino acid source which provides the rest of the amino acids is prepared, the mixture is heat treated by cooking and the cooked mixture is concentrated.

2. A process for the production of a flavouring agent, in which a mixture containing a sugar, a salt, a starting material of lovage in the form of pulp, ground fresh leaves or dried and ground leaves, which provides part of the amino acids, and an amino acid source which provides the rest of the amino acids is prepared and the mixture is heat-treated by cooking.

3. A process as claimed in claim 1 or 2, characterized in that the amino acid source is selected from the group consisting of a vegetable protein hydrolyzate, a yeast extract, sodium glutamate and a vegetable extract rich in proteins.

4. A process as claimed in claim 1, characterized in that a salt is added to the concentrated mixture.

5. A process as claimed in claim 4, characterized in that the concentrated and salted mixture is dehydrated by heating for 1 to 3 hours at 55 to 80°C under a pressure of 10 to 150 mbar.

6. A process as claimed in claim 2, characterized in that the cooked mixture is dehydrated by heating for 8 to 15 hours at 65 to 75°C under a pressure of 10 to 20 mbar.
